# EUROPEAN PATENT APPLICATION

(11) **EP 0 926 035 A1**
(43) Date of publication of application: **30.06.1999**
(21) Application number: 97122903.4
(22) Date of filing: 24.12.1997
(51) Int. Cl.: B60T 17/22

(54) **An electronic circuit for a motor vehicle parking brake**

(71) Applicant: FIAT AUTO S.p.A., 10135 Torino (IT)
(72) Inventor: Tarzia, Antonio, 10065 San Germano Chisone (TO) (IT)
(74) Representative: Di Francesco, Gianni

(57) **Abstract**

In an electronic control circuit for a motor vehicle parking brake, a pedal or lever actuator is connected to transmission members (1, 2, 3) for transmitting the movement of the actuator to a braking device. Between the pedal or lever actuator and the transmission members (1, 2, 3) there is interposed a load cell (4) for measuring the force exerted by said movement. The load cell supplies the circuit with an electric signal proportional to the measured force.

## Description

The present invention refers to an electronic control circuit for indicating that the preset maximum braking load for a motor vehicle parking brake has been reached.

Parking brake systems are generally fitted with an on-off switch that is activated upon shifting the lever or pedal actuator for stopping the vehicle. The switch closes an electric supply circuit for a warning light through a special connection circuit.

This prior art solution, however, is often misleading for the driver who, seeing the warning light on, thinks that the parking brake is on. Instead, if the braking load applied by the lever (or pedal) actuator is insufficient, braking of the vehicle is not ensured.

It is an object of the present invention to provide a control circuit capable of overcoming the above discussed disadvantage of the prior art, by signalling through the warning light that the required level of braking force has been attained. A further object of the present invention is to avoid that, owing to a faulty positioning of the switch, the warning light goes off before it should, thereby indicating that the parking brake is off, whilst the brake is still on. This provokes adverse consequences, such as over-heating of the brakes, excessively high fuel consumption and low performance of the vehicle.

These and other objects are achieved, according to the present invention, by an electronic control circuit as defined in appended claim 1.

Further advantages and features of the present invention will become readily apparent to those skilled in the art from a study of the following description of an exemplary preferred embodiment when read in conjunction with the attached drawings, in which:

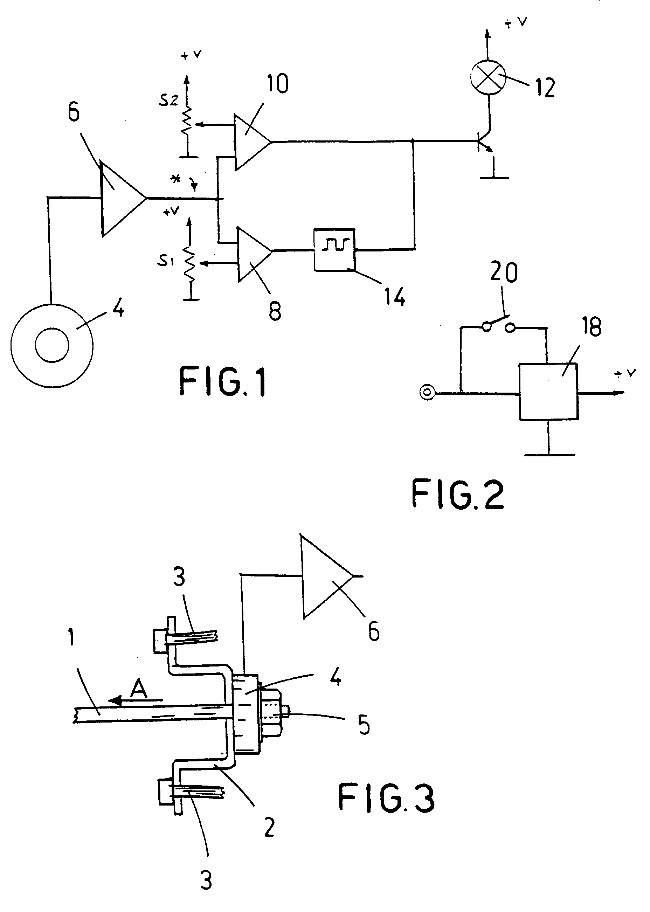

- FIG. 1: is a diagram of the electronic circuit for controlling the parking brake in accordance with the present invention;
- FIG. 2: schematically illustrates an additional circuit that can be associated to the circuit of FIG. 1;
- FIG. 3: illustrates the arrangement of the load cells for the circuit of FIG. 1 with respect to the stay rod of the parking brake lever.

Referring to the drawings, numeral 1 designates a stay rod connected to one end of a parking brake lever (not illustrated) of a motor vehicle. The other end of stay rod 1 is connected to a mobile yoke 2. The yoke 2 is secured to the end portions of two cables 3 leading to the parking brake shoes (not shown). The stay rod 1 translates in the direction indicated by arrow A when the parking brake is activated. The traction force exerted though the lever is transmitted to a load measuring cell 4 interposed between the yoke 2 and the end of the stay rod, to which the load cell is fixed by means of a threaded nut 5 with a washer.

The load cell 4, designed for emitting an output signal proportional to the measured load, is in electrical connection with a signal amplifier 6. Amplifier 6 has one output connected to first and second threshold comparators 8, 10 connected in parallel and preset on a first and a second threshold levels S1, S2 of different value. The first threshold level S1 corresponds to a load condition ranging between a minimum of zero and a safety load value; the second threshold value S2 defines the lower limit of the safety load. The output of the two comparators is connected to a warning light 12. Connected in series to the output of the first threshold comparator S1 is an intermittence device 14. In a second preferred embodiment of the invention, a retarded turnoff power supply 18 is connected in series between the load cell 4 and the amplifier 6. The power supply 18 supplies the signal amplifier 6 for a preset period of time after the opening of the main starting switch 20.

Control of the braking by the illustrated circuit is as follows.

Upon actuating the parking brake lever, a traction force is exerted. In mechanically controlled brakes, the traction force is transmitted, as mentioned, through the cables to the parking brake shoes. With hydraulic parking brakes, the manual lever acts upon a piston that increases the pressure of a fluid controlling said shoes. The force exerted on the stay rod is sensed, according to the present invention, by the load cell 4 that converts the force into an electric signal proportional to the braking load being applied. Such a signal is then transmitted to the amplifier 6, which in turn transmits an amplified, corresponding signal to the comparators 8 and 10. According to its amplitude, the signal passes through the first or the second comparator. Particularly, if the signal is ranging between the "zero" value S1 and the safety threshold value S2, the current supplied flows through the first comparator to the warning light 12 through an intermittence device 14. In such a condition, i.e. when the load acting on the parking brake is insufficient, the intermittence device 14 makes the warning light 12 flash. In this manner, the user is made aware of the scarce efficiency of the parking brake or of the fact that the parking brake is still on when the car is started up.

The second signal level S2, corresponding to a minimum safety load preset for each car model, provokes a supply of current to the warning light 12 through the second comparator 10, thereby without activating the intermittence device 14. In such instance, the warning light 12 is lit in a continuos mode. This informs the driver that the vehicle is being braked correctly.

Owing to the retarded turnoff power supply 18, the circuit in accordance with the preferred embodiment of the present invention allows to check the condition of the warning light 12 also when the general switch 20 has just been turned off.

As apparent, in a rest condition no power is supplied to the warning light 12.

The arrangement of the various components may be change according to the kind of lever or pedal for actuating the brake without departing from the inventive concepts disclosed herein.

## Claims

1. An electronic control circuit for a motor vehicle parking brake, the parking brake comprising at least one pedal or lever actuator connected to transmission means (1, 2, 3) for transmitting the movement of said actuator to a braking device, characterised in that between said pedal or lever actuator and said transmission means (1, 2, 3) there is interposed a measuring means (4) for measuring the force exerted by said movement, said measuring means supplying said circuit with an electric signal proportional to the measured force.

2. An electronic control circuit as claimed in claim 1, characterised in that said means for measuring the force consists of a load cell (4).

3. An electronic control circuit as claimed in claims 1 and 2, characterised in that said load cell is electrically connected to a signal amplifier (6) in turn connected to first (8) and second (10) threshold comparators.

4. An electronic control circuit as claimed in claims 1 and 3, characterised in that said threshold comparators have threshold levels preset in accordance with the load necessary to ensure a safe braking action, said comparators being electrically connected to a warning light (12).

5. An electronic control circuit as claimed in claims 3 and 4, characterised in that interposed between said first threshold comparator (8) and said warning light (12) there is connected in series an intermittence device (14).
